# EUROPEAN PATENT APPLICATION

(11) **EP 4 064 015 A1**
(43) Date of publication of application: **28.09.2022**
(21) Application number: 21195188.4
(22) Date of filing: 07.09.2021
(51) Int. Cl.: G06F 3/0481, G06F 3/04817, G06F 3/0482, G06F 3/0483, G06F 3/0485

(54) **INFORMATION PROCESSING APPARATUS AND PROGRAM**

(30) Priority: 26.03.2021 JP 2021053683
(71) Applicant: Fujifilm Business Innovation Corp., Tokyo 107-0052 (JP)
(72) Inventor: MOCHIZUKI, Masanari, Kanagawa, 220-8668 (JP)
(74) Representative: Parker, Andrew James

(57) **Abstract**

An information processing apparatus includes: a processor configured to display a thumbnail image of an object on a screen instead of opening the object in response to a selection of the object, and present, on the screen, at least one candidate that is referable and that is to be displayed together with the displayed thumbnail image of the object.

## Description

### BACKGROUND

### Technical Field

The present disclosure relates to an information processing apparatus and a program.

### Related Art

For example, JP-A-2007-323346 discloses an information processing apparatus that displays a tool chip including file information such as an update date and time and a size of a target file and a preview representing a content of the target file when a pointer points to an icon of the file.

### SUMMARY

Here, when a thumbnail image of an object to be browsed is displayed on a screen, displaying a thumbnail image for assisting browsing work in a referable manner may improve efficiency in browsing the object.

Aspects of non-limiting embodiments of the present disclosure relate to enabling a user to efficiently browse a thumbnail image of an object to be browsed, as compared with a case of, when a thumbnail image of an object to be browsed is displayed on a screen, not displaying a thumbnail image for assisting browsing work in a referable manner.
[1] According to an aspect of the present disclosure, there is provided an information processing apparatus including: a processor configured to display a thumbnail image of an object on a screen instead of opening the object in response to a selection of the object, and present, on the screen, at least one candidate that is referable and that is to be displayed together with the displayed thumbnail image of the object.
[2] In the information processing apparatus according to [1], the processor may be configured to display, on the screen, at least one thumbnail image of the at least one candidate as at least one candidate thumbnail image.
[3] In the information processing apparatus according to [2], the at least one candidate thumbnail image may be at least one other thumbnail image of the object other than the thumbnail image of the object displayed on the screen.
[4] In the information processing apparatus according to [2], the at least one candidate thumbnail image may be a thumbnail image of at least one other object.
[5] In the information processing apparatus according to [2], the at least one candidate thumbnail image may include plural candidate thumbnail images, and the plural candidate thumbnail images may be displayed, on the screen, in a partially overlapped state or in a separated state.
[6] In the information processing apparatus according to [1], the at least one candidate may be presented, on the screen, in a group of candidates divided according to a predetermined condition.
[7] In the information processing apparatus according to [6], the predetermined condition may be changeable by a user.
[8] The information processing apparatus according to [6], plural regions for selecting the group of candidates may be provided in the screen, and relative positions of the plural regions may be changeable by a user.
[9] In the information processing apparatus according to [2], the at least one candidate thumbnail image may include at least one other thumbnail image of the object other than the thumbnail image of the object displayed on the screen and a thumbnail image of at least one other object, and the screen may be divided into an area in which the thumbnail image of the object is displayed, an area in which the at least one other thumbnail image is displayed, and an area in which thumbnail image of the at least one other object is displayed.
[10] According to another aspect of the present disclosure, there is provided an information processing apparatus including a processor configured to divide a screen into a first area in which a thumbnail image of an object is displayed instead of opening the object in response to a selection of the object, and a second area in which at least one thumbnail image of a candidate that is referable and that is to be displayed together with the displayed thumbnail image of the object in the first area, and divide the second area into an area in which at least one other thumbnail image of the object other than the displayed thumbnail image in the first area is displayed and in which a thumbnail image designated by a user from the at least one other thumbnail image of the object is displayed in an enlarged state, and an area in which at least one thumbnail image of at least one other object is displayed and in which a thumbnail image designated by the user from the at least one thumbnail image of the at least one other object is displayed in an enlarged state.
[11] According to another aspect of the present disclosure, there is provided a program causing a computer to execute a process, the process including: displaying a thumbnail image of an object on a screen instead of opening the object in response to a selection of the object, and presenting, on the screen, at least one candidate that is referable and that is to be displayed together with the displayed thumbnail image of the object.
[12] According to another aspect of the present disclosure, there is provided a program causing a computer to execute a process, the process including: dividing a screen into a first area in which a thumbnail image of an object is displayed instead of opening the object in response to a selection of the object, and a second area in which at least one thumbnail image of a candidate that is referable and that is to be displayed together with the displayed thumbnail image of the object in the first area, and dividing the second area into an area in which at least one other thumbnail image of the object other than the displayed thumbnail image in the first area is displayed and in which a thumbnail image designated by a user from the at least one other thumbnail image of the object is displayed in an enlarged state, and an area in which at least one thumbnail image of at least one other object is displayed and in which a thumbnail image designated by the user from the at least one thumbnail image of the at least one other object is displayed in an enlarged state.

According to [1], a user can efficiently browse the thumbnail image of the object to be browsed, as compared with a case of not displaying the thumbnail image of an object to be browsed such that the thumbnail image for assisting browsing work can be referred to when the thumbnail image is displayed on the screen.

According to [2], it is possible to easily check a content of the candidate as compared with a case in which the candidate is displayed in a form other than the thumbnail image.

According to [3], it is possible to improve browsing efficiency as compared with a case in which the candidate thumbnail image is not another thumbnail image of the object of the candidate thumbnail image.

According to [4], it is possible to improve the browsing efficiency as compared with a case in which the candidate thumbnail image is not a thumbnail image of an object other than the object of the candidate thumbnail image.

According to [5], it is possible to improve usability of the user as compared with a case in which the plural thumbnail images serving as candidate thumbnail images are not partially overlapped or separated from one another and displayed.

According to [6], it is possible to easily select a candidate as compared with a case in which the candidate thumbnail image is not divided into a group of candidates meeting a predetermined condition and is not displayed on the screen.

According to [7], it is possible to improve the usability of the user as compared with a case in which the predetermined condition is not changeable by the user.

According to [8], it is possible to improve the usability of the user as compared with a case in which the relative positions of the regions for selecting the group of candidates are not changeable by the user.

According to [9], it is possible to improve the browsing efficiency as compared with a case in which the screen is not divided into a range showing the thumbnail image, a range showing the thumbnail image other than the thumbnail image, and a range showing the thumbnail image of an object other than the object.

According to [10], a user can efficiently browse the thumbnail image of the object to be browsed, as compared with a case of not displaying the thumbnail image of an object to be browsed such that the thumbnail image for assisting browsing work can be referred to when the thumbnail image is displayed on the screen.

According to [11], a user can efficiently browse the thumbnail image of the object to be browsed, as compared with a case of not displaying the thumbnail image of an object to be browsed such that the thumbnail image for assisting browsing work can be referred to when the thumbnail image is displayed on the screen.

According to [12], a user can efficiently browse the thumbnail image of the object to be browsed, as compared with a case of not displaying the thumbnail image of an object to be browsed such that the thumbnail image for assisting browsing work can be referred to when the thumbnail image is displayed on the screen.

### BRIEF DESCRIPTION OF DRAWINGS

Exemplary embodiment(s) of the present invention will be described in detail based on the following figures, wherein:
Fig. 1 shows a hardware configuration example of an image display device to which an exemplary embodiment is applied;
Fig. 2 shows a configuration example of an operation screen displayed on a display;
Fig. 3 is a block diagram showing a functional configuration example of the image display device;
Fig. 4 is a block diagram showing a functional configuration example of the image display device;
Fig. 5 shows a configuration of an extended display region;
Fig. 6 shows a transition of the extended display region;
Fig. 7 shows a transition of the extended display region;
Fig. 8 shows a transition of the extended display region;
Fig. 9A shows a first display mode example of a candidate area of an other page thumbnail image display area;
Fig. 9B show a second display mode example of the candidate area of the other page thumbnail image display area;
Fig. 9C show a third display mode example of the candidate area of the other page thumbnail image display area;
Figs. 10A, 10B and 10C show a situation in which an other page thumbnail image group 651 that is bundled and displayed in the candidate area of the other page thumbnail image display area is changed to a state of not being bundled, and are shown in time series in time-series order;
Fig. 11A shows a forth display mode example of a candidate area of an other document thumbnail image display area;
Fig. 11B shows a fifth display mode example of the candidate area of the other document thumbnail image display area;
Fig. 11C shows a sixth display mode example of the candidate area of the other document thumbnail image display area;
Fig. 12 is a flowchart showing a processing procedure example according to the present exemplary embodiment;
Fig. 13A shows a first modification of the extended display area;
Fig. 13B shows a second modification of the extended display area;
Fig. 13C show a third modification of the extended display area; and
Fig. 13D shows a fourth modification of the extended display area.

### DETAILED DESCRIPTION

Hereinafter, an exemplary embodiment of the present disclosure will be described in detail with reference to the accompanying drawings.

### (Hardware Configuration of Image Display Device 1)

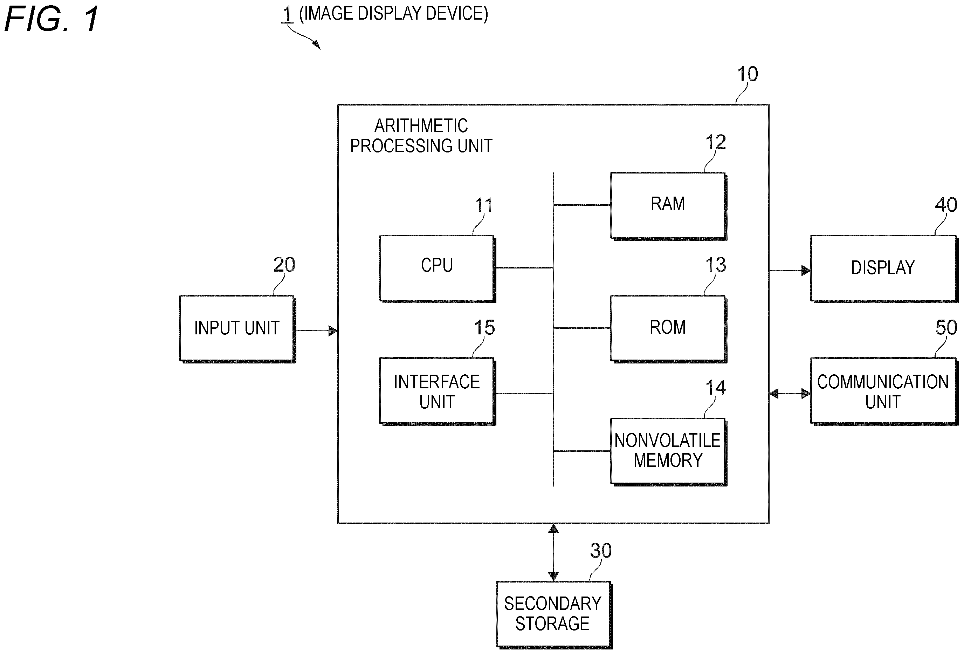

Fig. 1 shows a hardware configuration example of an image display device 1 to which the present exemplary embodiment is applied.

As shown in Fig. 1, the image display device 1 according to the present exemplary embodiment includes an arithmetic processing unit 10 configured to execute digital arithmetic processing according to a predetermined processing program when a screen is displayed, an input unit 20 configured to receive an input operation from a user, and a secondary storage 30 that is implemented by a hard disk drive (HDD). The image display device 1 includes a display 40 including a liquid crystal display panel or an organic electro-luminescence (EL) display panel configured to display an image, text information, and the like to the user, and a communication unit 50 configured to transmit and receive data via a network. The image display device 1 is an example of an information processing apparatus.

The arithmetic processing unit 10 includes a central processing unit (CPU) 11 configured to control the entire device as an example of a processor, a random access memory (RAM) 12 used as a working memory of the CPU 11 or the like, and a read only memory (ROM) 13 in which an image display processing program or the like executed by the CPU 11 is stored. The arithmetic processing unit 10 further includes a nonvolatile memory 14 such as a static RAM (SRAM) or a flash memory that is backed up by a battery, that is rewritable, and that is configured to retain data even when power supply is interrupted, and an interface unit 15 configured to control a unit such as the input unit 20 connected to the arithmetic processing unit 10. The nonvolatile memory 14 stores image information such as a thumbnail image displayed on the display 40.

The input unit 20 is a device such as a pointing device for the user to input an operation.

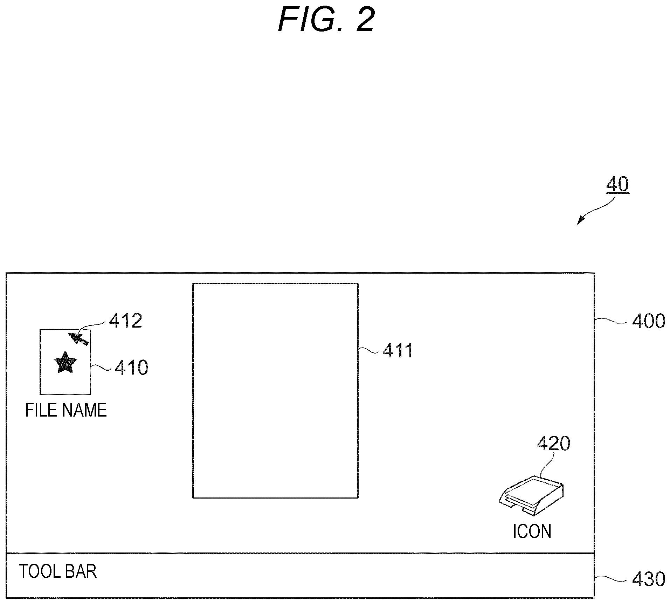

For example, when the input unit 20 is a mouse or the like, the user may designate a position on a screen of the display 40, a displayed image, and the like by performing a moving operation or a click operation of a cursor 412 (see Fig. 2).

When the input unit 20 is a touch panel or the like, the user may designate a position on the screen or a displayed image by performing an operation of bringing a finger or the like into contact with a touch panel or an operation of maintaining a state in which the finger or the like is in contact with the touch panel for a period longer than a predetermined time. In this case, the input unit 20 is provided integrally with the display 40.

In addition to the device such as the above-described pointing device, a keyboard or the like configured to perform a key input operation may be provided as the input unit 20.

In addition to storing image data and the like, the secondary storage 30 stores an image display processing program executed by the arithmetic processing unit 10. Processing of the image display device 1 according to the present exemplary embodiment is executed by the arithmetic processing unit 10 reading the image display processing program.

The display 40 is configured to display, for example, an office document or the like created by office software or other application programs, and a thumbnail image that is highly convenient for managing plural application files, image files, and the like is used.

This thumbnail image refers to an image reduced in order to display a list of files, and it is possible to roughly grasp a content without opening the file.

In a case in which this file includes plural pages, in addition to a reduced display mode in which contents of only a first page or a representative page may be roughly grasped, the file may be displayed in a reduced display mode in which all pages may be separated so as to be distinguished for each page and contents of the pages may be roughly grasped. The thumbnail image may be displayed in an image mode in which the thumbnail image is enlarged and displayed on the display 40 by an operation of the user without opening the file. The image according to this aspect may be referred to as an "enlarged thumbnail image", and a display of the enlarged thumbnail image may be referred to as an "enlarged display".

The file may have a single page configuration or a page configuration in which plural of pages are bundled. The thumbnail image or the enlarged thumbnail image is an example of a thumbnail image of an object.

Here, a program executed by the CPU 11 is provided to the arithmetic processing unit 10 in a state of being stored in a computer-readable recording medium such as a magnetic recording medium (for example, a magnetic tape and a magnetic disk), an optical recording medium (for example, an optical disk), an optical magnetic recording medium, and a semiconductor memory. The program executed by the CPU 11 may be downloaded to the image display device 1 using a communication unit such as the Internet.

In the exemplary embodiments, the term "processor" refers to hardware in a broad sense. Examples of the processor include general processors (e.g., CPU: Central Processing Unit), and dedicated processors (e.g., GPU: Graphics Processing Unit, ASIC: Application Specific Integrated Circuit, FPGA: Field Programmable Gate Array, and programmable logic device).

In the exemplary embodiments, the term "processor" is broad enough to encompass one processor or plural processors in collaboration which are located physically apart from each other but may work cooperatively. The order of operations of the processor is not limited to one described in the exemplary embodiments above, and may be changed.

The image display device 1 may be connected to another device via the network. Accordingly, a document or the like that is created by another device and is transferred by the network may be displayed on the image display device 1. For example, when a certain task includes plural of documents such as a development specification document and a task order document, the plural documents may be displayed on the image display device 1. The image display device 1 may perform an operation of rotating each page to a different related department, and finally bundling and completing the pages as one document, and further, for example, an operation such as approval may be executed.

A local area network (LAN) or the Internet is used as this network. However, this network may have a composite configuration of a LAN and the Internet.

Fig. 2 shows a configuration example of an operation screen 400 displayed on the display 40. The operation screen 400 referred to here is an example of a screen.

The display 40 displays the operation screen 400 shown in Fig. 2. The operation screen 400 is a workspace on file handling software, and is a region in which an image related to a file selected by the user, a thumbnail image 410, and the like are provided.

The file handling software is software for computerizing and managing a file such as image data and document data, and has a function of promoting unified management of paper and electrons.

The thumbnail image 410 is an image for checking a content of a file before the file is opened, and is a display target. More specifically, the thumbnail image 410 is an image for checking at least a part of a content of a file managed by the file handling software. For example, when the corresponding file is image data, an original image is simply displayed as a reduced image. When the corresponding file is document data of plural pages, a representative page such as a first page is displayed as a reduced image.

In the present exemplary embodiment, the thumbnail image 410 functions as an icon for opening the corresponding file. For example, by performing a specific operation such as a double-click operation on the thumbnail image 410, the corresponding file may be opened.

In addition to the thumbnail image 410, an icon 420 and a tool bar 430 are displayed on the operation screen 400. An extended display region 411 for assisting an operation of the user is displayed on the operation screen 400, and the cursor 412 for pointing to a position on the screen is displayed.

The icon 420 represents various functions such as a program function by a pictorial symbol. The tool bar 430 is a set of instruction units that receive an instruction from the user.

The extended display region 411 is a region in which an image including an enlarged thumbnail image is displayed. For example, when a user operation such as the cursor 412 continuing to point to a position of the thumbnail image is detected, the image is displayed. An operation of superimposing the cursor 412 on the position of the thumbnail image on the operation screen 400 may be referred to as "mouseover".

The enlarged thumbnail image is obtained by enlarging the thumbnail image 410 instructed to be enlarged by the user, and is displayed without newly starting a program. It is assumed that the enlarged thumbnail image is enlarged and displayed in a size that allows the user to understand a content of the thumbnail image 410. More specifically, the enlarged thumbnail image is displayed larger than a size of the corresponding thumbnail image 410.

More specifically, in addition to the enlarged thumbnail image, a related image which is related to the enlarged thumbnail image is displayed in the extended display region 411. The related image is a candidate that may be referred to when the user checks the enlarged thumbnail image. In the present exemplary embodiment, this candidate is displayed as a thumbnail image. As the candidate that may be referred to when the user checks the enlarged thumbnail image, for example, a list display may be used in addition to the thumbnail display.

### (Functional Configuration of Image Display Device 1)

Next, a functional configuration of the image display device 1 will be described.

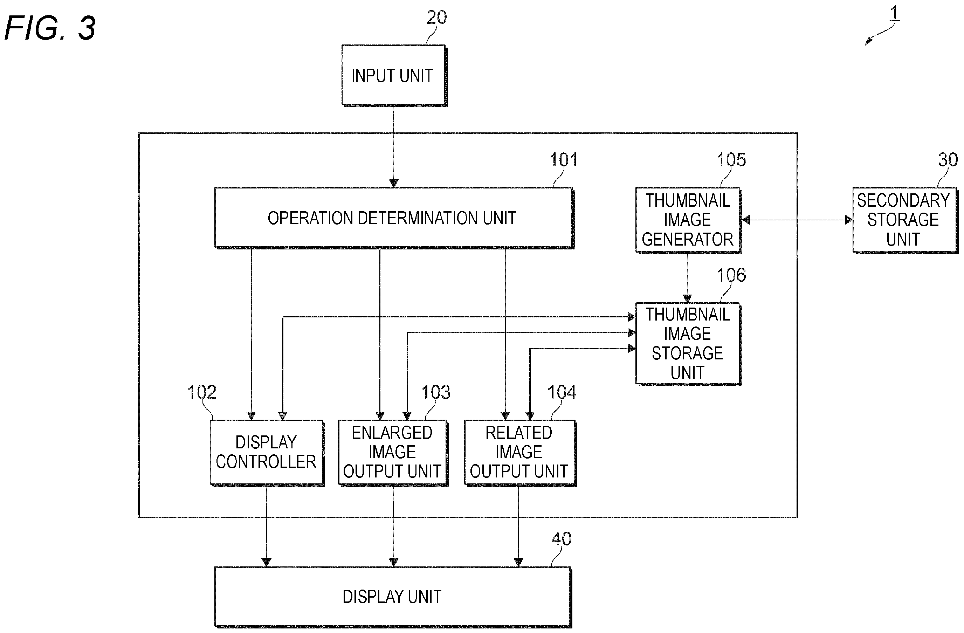

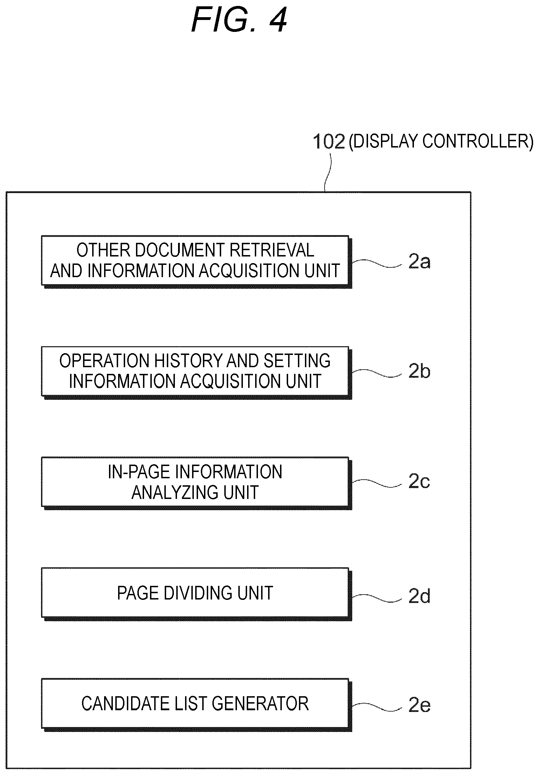

Figs. 3 and 4 are block diagrams showing a functional configuration example of the image display device 1.

As shown in Fig. 3, the image display device 1 includes an operation determination unit 101, a display controller 102, an enlarged image output unit 103, a related image output unit 104, a thumbnail image generator 105, and a thumbnail image storage unit 106, which are implemented by the arithmetic processing unit 10 (see Fig. 1).

The operation determination unit 101 is configured to determine whether a user operation via the input unit 20 has been performed on the operation screen 400 (see Fig. 2). The user operation is, for example, an operation of designating an image, an icon, a position, or the like on the operation screen 400, a scroll operation, a key input operation, or the like. The user operation also includes the above-described mouseover and a predetermined key operation of a keyboard such as an operation of simultaneously pressing a control key and a shift key.

The display controller 102 is configured to control, based on a content determined by the operation determination unit 101, a mode and a position of a display of an image, the icon 420, the tool bar 430 (see Fig. 2), and the like. The thumbnail image 410 is captured from the thumbnail image storage unit 106 and is controlled to be displayed as an icon for opening a corresponding file.

The enlarged image output unit 103 is configured to extract, based on a determination of the operation determination unit 101, the thumbnail image 410 from the thumbnail image storage unit 106, and to output the enlarged thumbnail image obtained by enlarging the thumbnail image 410 to the display 40 without newly starting the program.

In this way, the enlarged image output unit 103 executes control to display the enlarged thumbnail image in the extended display region 411 that appears on the display 40 when the mouseover occurs, or executes control to display the enlarged thumbnail image in the extended display region 411 that appears on the display 40 when a predetermined key operation is performed.

The related image output unit 104 is configured to output a related image to the extended display region 411 when a display is executed in the extended display region 411. Accordingly, the enlarged thumbnail image and the thumbnail image of the related image are displayed in the extended display region 411.

The thumbnail image generation unit 105 is configured to generate, based on a file such as image data stored in the secondary storage 30, the thumbnail image 410 displayed on the operation screen 400.

The thumbnail image storage unit 106 is configured to acquire and store the thumbnail image 410 generated by the thumbnail image generation unit 105. The thumbnail image storage unit 106 is implemented by the nonvolatile memory 14.

More specifically, as shown in Fig. 4, the display controller 102 shown in Fig. 3 includes an other document retrieval and information acquisition unit 2a, an operation history and setting information acquisition unit 2b, an in-page information analyzing unit 2c, a page dividing unit 2d, and a candidate list generator 2e.

The other document retrieval and information acquisition unit 2a is configured to search for another document other than a document to be displayed and to acquire information of the other document. The operation history and setting information acquisition unit 2b is configured to acquire an operation history of the input unit 20 by the user and to acquire the setting information executed by the user.

The in-page information analyzing unit 2c is configured to analyze information in a page of the document to be displayed and the other document. The page dividing unit 2d is configured to divide pages of the document to be displayed and the other document according to a predetermined condition.

The candidate list generator 2e is configured to generate candidate list information of the related image output by the related image output unit 104.

### (Configuration of Extended Display Region 411)

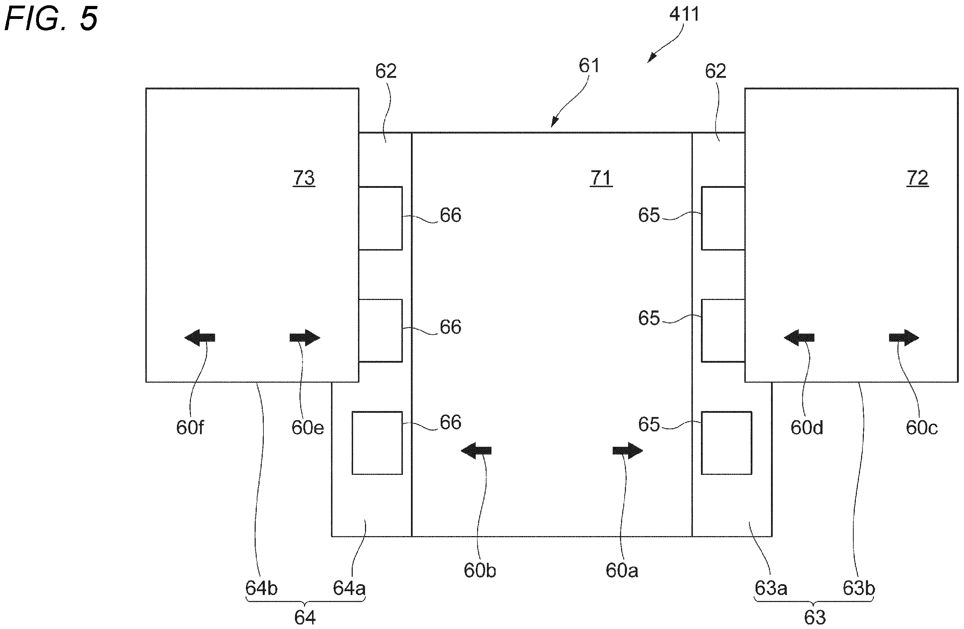

Fig. 5 shows a configuration of the extended display region 411.

As shown in Fig. 5, the extended display region 411 is divided into a main thumbnail image display area 61 for displaying a main thumbnail image 71 for which a cursor operation as a trigger for a display in the extended display region 411 is performed, and a related thumbnail image display area 62 for displaying a related thumbnail image which is a related image related to the main thumbnail image 71 displayed in the main thumbnail image display area 61. The main thumbnail image 71 referred to here is an enlarged thumbnail image. However, a thumbnail image that is not enlarged may be displayed in the main thumbnail image display area 61.

The related thumbnail image display area 62 is divided into an other page thumbnail image display area 63 for displaying a thumbnail image (other page thumbnail image) 65 of another page of a file including the main thumbnail image 71, and an other document thumbnail image display area 64 for displaying a thumbnail image (other document thumbnail image) 66 of a page unit included in a file other than the file including the main thumbnail image 71, that is, another document.

Here, the main thumbnail image 71 is an example of a thumbnail image of the object that is selected and displayed on the screen without opening the object.

The other page thumbnail image 65 and the other document thumbnail image 66 are examples of candidates that may be referred to and are selected and displayed together with the thumbnail image shown on the screen without opening the object, and are examples of candidate thumbnail images.

The other page thumbnail image 65 is a thumbnail image other than the main thumbnail image 71, and is an example of an other thumbnail image.

The file including the main thumbnail image 71 is an example of an object, and the file other than the file including the main thumbnail image 71 is an example of another object other than the object. The other document thumbnail image 66 is an example of a thumbnail image of the other object.

The extended display region 411 has a horizontally long rectangular shape, and the related thumbnail image display area 62 is provided on left and right of the main thumbnail image display area 61. Specifically, the other page thumbnail image display area 63 is provided on a right side of the main thumbnail image display area 61, and the other document thumbnail image display area 64 is provided on a left side of the main thumbnail image display area 61. In this way, the main thumbnail image display area 61 is formed at a center in a left-right direction, and the other page thumbnail image display area 63 and the other document thumbnail image display area 64 are separately distributed to the left and right.

In this left-right arrangement, when the operation screen 400 of the display 40 has a horizontally long shape, the main thumbnail image 71, the other page thumbnail image 65, and the other document thumbnail image 66 may be efficiently displayed.

More specifically, the other page thumbnail image display area 63 includes a candidate area 63a for displaying the other page thumbnail images 65 as a candidate, and an area 63b in which a thumbnail image designated by the user among the other page thumbnail images 65 displayed in the candidate area 63a is enlarged and shown.

The other document thumbnail image display area 64 includes a candidate area 64a for displaying the other document thumbnail images 66 as a candidate, and an area 64b in which a thumbnail image designated by the user among the other document thumbnail images 66 is enlarged and shown.

In addition, in the main thumbnail image display area 61, instruction units 60a, 60b for page feed on the main thumbnail image 71 displayed in the main thumbnail image display area 61 are displayed. It is possible to display another enlarged thumbnail image by operating the instruction units 60a, 60b.

When the enlarged thumbnail image 72 is displayed in the area 63b of the another page thumbnail image display area 63, instruction units 60c, 60d enabling a page feed instruction by an operation of the user are displayed in the area 63b. When the enlarged thumbnail image 73 is displayed in the area 64b of the other document thumbnail image display area 64, instruction units 60e, 60f enabling a page feed instruction by an operation of the user are displayed in the area 64b.

Here, the main thumbnail image display area 61 is an example of an area in which a thumbnail image is shown, the another page thumbnail image display area 63 is an example of an area in which another thumbnail image is shown, and the another document thumbnail image display area 64 is an example of an area in which a thumbnail image of another object is shown.

The main thumbnail image display area 61 is an example of a first area, and the related thumbnail image display area 62 is an example of a second area. The other page thumbnail image display area 63 is an example of an area in which other thumbnail images are shown and a thumbnail image designated by the user among the other thumbnail images is enlarged and shown. That is, the candidate area 63a of the other page thumbnail image display area 63 is an example of the area in which the other thumbnail images are shown, and the area 63b is an example of the area in which the thumbnail image designated by the user among the other thumbnail images is enlarged and shown.

The other document thumbnail image display area 64 is an example of an area in which thumbnail images of other objects are shown and a thumbnail image designated by the user among the thumbnail images of other objects is enlarged and shown. That is, the candidate area 64a of the other document thumbnail image display area 64 is an example of the area in which the thumbnail images of other objects are shown, and the area 64b is an example of the area in which the thumbnail image designated by the user among the thumbnail images of other objects is enlarged and shown.

### (Transition of Extended Display Region 411)

Next, a transition related to the display of the extended display region 411 of the display 40 will be described.

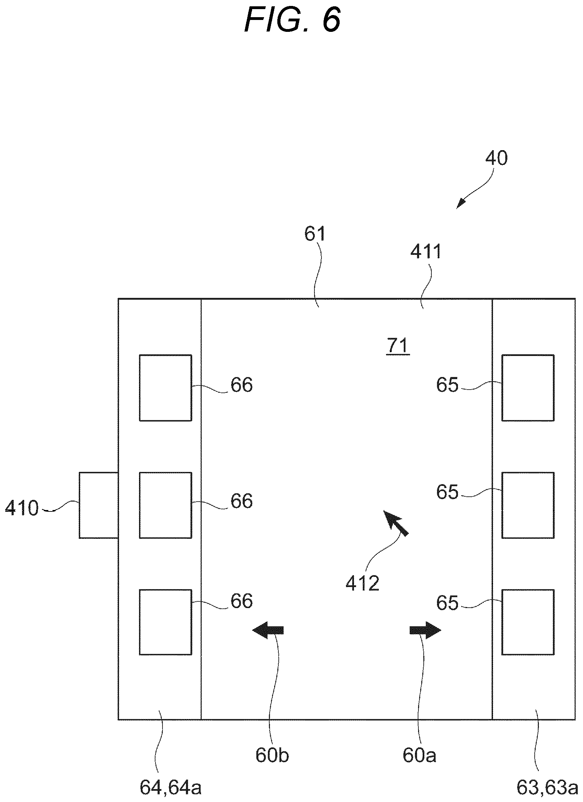

Figs. 6, 7, and 8 show transitions of the extended display region 411. Hereinafter, a state in Fig. 6 will be described, and the transition from Fig. 6 to Fig. 7 and the transition from Fig. 6 to Fig. 8 will be described.

The state shown in Fig. 6 is a state in which the extended display region 411 is displayed on the display 40 when a user operation is performed on the thumbnail image 410.

In the extended display region 411, the main thumbnail image 71 of the thumbnail image 410 is displayed in the main thumbnail image display area 61. Plural other page thumbnail images 65 are displayed in the candidate area 63a of the other page thumbnail image display area 63, and plural other document thumbnail images 66 are displayed in the candidate area 64a of the other document thumbnail image display area 64.

In the state shown in Fig. 6, since the cursor 412 is located in the main thumbnail image display area 61, the enlarged thumbnail images 72, 73 (see Fig. 5) are not displayed in any of the areas 63b, 64b.

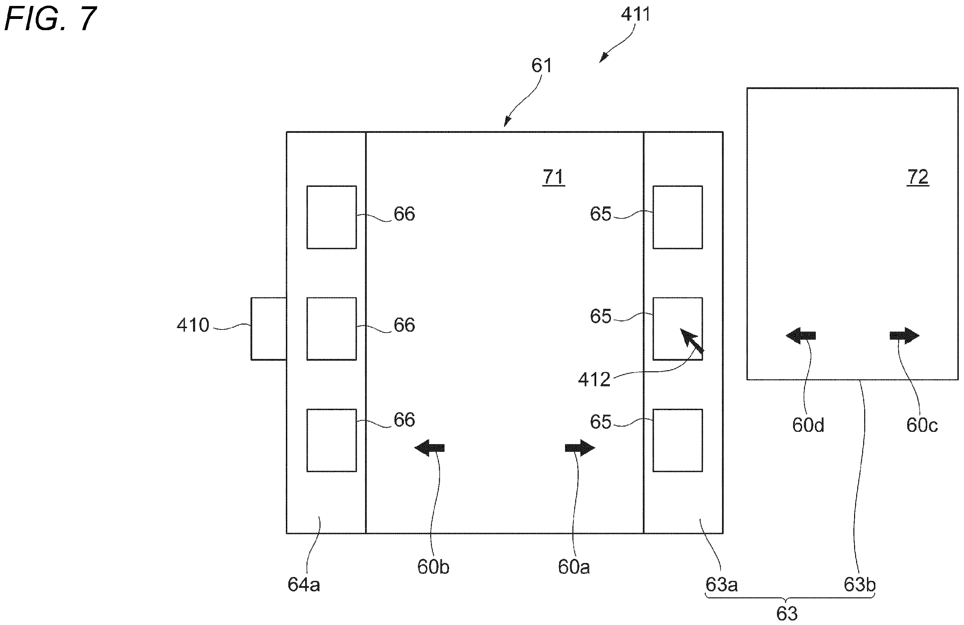

A state shown in Fig. 7 is a state in which any one of the plural other page thumbnail images 65 in the candidate area 63a is designated by the cursor 412 by the user.

By the designation of the other page thumbnail image 65, the state in Fig. 6 transitions to the state in Fig. 7 in which the enlarged thumbnail image 72 of the designated other page thumbnail image 65 is displayed in the area 63b.

The enlarged thumbnail image 72 continues to be displayed while the other page thumbnail image 65 is designated by the cursor 412. When the cursor 412 designates another other page thumbnail image 65 (another candidate) in the candidate area 63a, a content of the enlarged thumbnail image 72 displayed in the area 63b is changed.

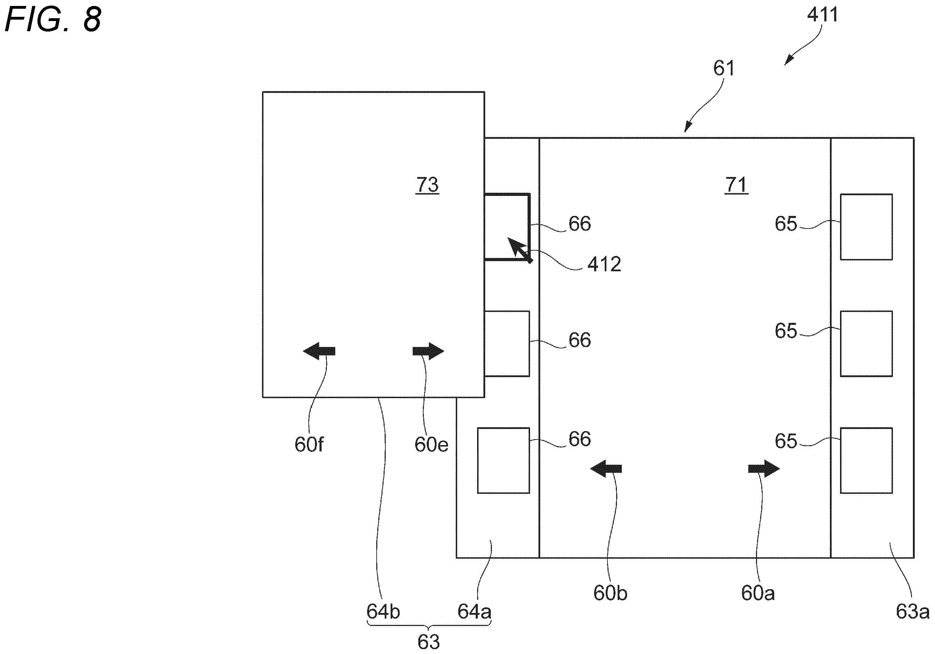

A state shown in Fig. 8 is a state in which any one of the plural other document thumbnail images 66 in the candidate area 64a is designated by the cursor 412.

By the designation of the other document thumbnail image 66, the state in Fig. 6 transitions to the state in Fig. 8 in which the enlarged thumbnail image 73 of the designated other document thumbnail image 66 is displayed in the area 64b.

The transition from Fig. 6 to Fig. 7 and the transition from Fig. 6 to Fig. 8 have been described. However, the present disclosure is not limited thereto. A modification that enables a transition from Fig. 7 or 8 to Fig. 5 is also conceivable.

### (Display Mode in Candidate Area 63a of Other Page Thumbnail Image Display Area 63)

Next, a display mode in the candidate area 63a of the other page thumbnail image display area 63 will be described.

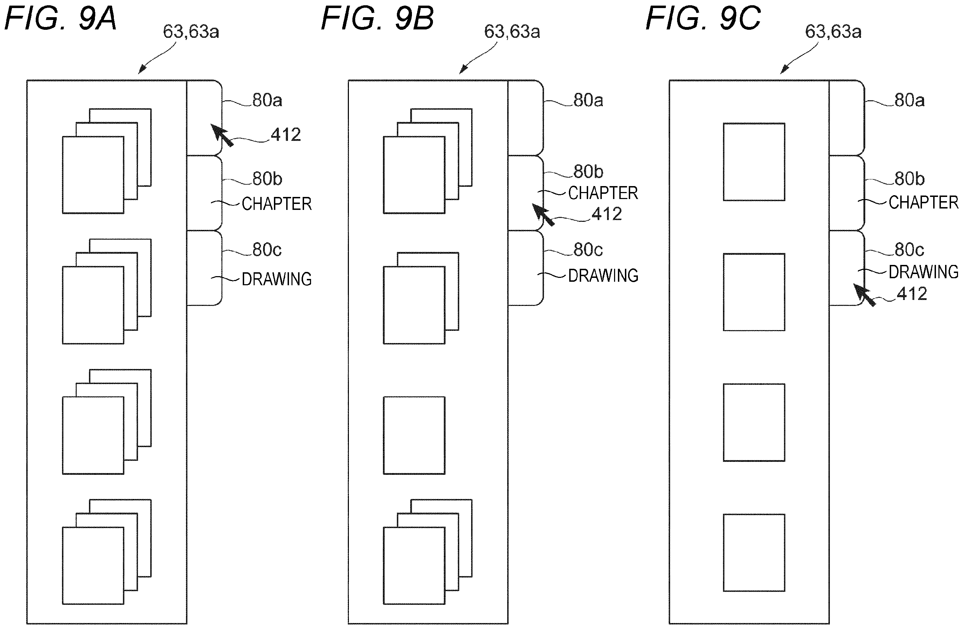

Figs. 9A, 9B and 9C show display modes of the candidate area 63a of the other page thumbnail image display area 63, in which Fig. 9A shows a first display mode example, Fig. 9B shows a second display mode example, and Fig. 9C shows a third display mode example.

The first display mode example shown in Fig. 9A is a page number division display in which all pages constituting a document are divided and displayed by a predetermined number in order of the number of the pages. For example, when the document is divided at three page intervals in a case of a document having a seven-page configuration, the other page thumbnail images 65 are displayed in a form of being divided into pages 1 to 3, pages 4 to 6, and a page 7.

The second display mode example shown in Fig. 9B is a segment division display in which characters in a document are analyzed to detect segments roughly divided in an article configuration, and the other page thumbnail images 65 are displayed in each divided segment. Examples of the segment division display include chapter division in which a page at a beginning of a chapter is detected and division is executed for each chapter, and type division in which a type of each paper is detected in a case where the document is formed by combining plural papers is detected and division is executed for each type.

In a case of the chapter division, for example, the other page thumbnail images 65 are displayed in a form of being divided into bundles of pages such as a first chapter and a second chapter.

In a case of the type division, for example, in a case of a patent application document, the other page thumbnail images 65 are displayed in a form of being divided into an application, a specification, claims, drawings, and an abstract. Parts of the specification that the user is likely to want to refer to, for example, columns of a "related art", a "technical problem", a "brief description of the drawings", and a "detailed description" may be extracted, and the other page thumbnail images 65 may be displayed in a form of being separated for each column.

In the case of the type division, it is assumed that plural columns are described on one page. For example, the "related art" and the "technical problem" are both displayed on a first page. In this case, in addition to an example (a page duplication display) in which the first page is displayed as the column of the "related art" and the first page is displayed as the column of the "technical problem", that is, the first page is displayed in a form of being divided for each column, an example (an omitted display) in which the columns of the "related art" and the "technical problem" are collectively displayed on the first page and the duplicating page display is omitted is conceivable. In addition to a case in which the display is selected by the user, it is conceivable that a selection of the user in the past is stored, and the CPU selects, based on this storage, the most frequently used one, the latest one, or the like.

The third display mode example shown in Fig. 9C is an extraction display in which presence or absence of a drawing is detected for all pages constituting an article, and only a page including a drawing is extracted and displayed. That is, in the third display mode example, only a page meeting a predetermined condition is extracted, and a page that has not been extracted is not displayed while the extracted page is displayed.

As shown in Figs. 9A to 9C, three tab types which are a first tab 80a, a second tab 80b, and a third tab 80c are displayed in the candidate area 63a of the other page thumbnail image display area 63. The tabs 80a to 80c are images of index tabs for changing a display mode of the candidate area 63a. By selecting any one of the tabs 80a to 80c, the display mode of the candidate area 63a is switched.

More specifically, the first tab 80a, the second tab 80b, and the third tab 80c respectively correspond to the first display mode example, the second display mode example, and the third display mode example described above. That is, when the first tab 80a is selected, the above-described first display mode example is displayed in the candidate area 63a. When the second tab 80b is selected, the above-described second display mode example is displayed in the candidate area 63a, and when the third tab 80c is selected, the above-described third display mode example is displayed.

The first display mode example is a display condition in which all the pages are divided and displayed by a predetermined number. The second display mode example is a display condition in which the other page thumbnail images 65 are divided and displayed for each segment roughly divided in the article configuration, and the third display mode example is a display condition in which the page including a drawing is extracted and displayed. The display conditions are not limited to these, other display conditions may be set, and the display conditions may be changed by the user.

Here, as the first display mode when the extended display area 411 (see Fig. 6) appears on the display 40, it is possible to use the first display mode example in which the display control is most easily executed among the first display mode example to the third display mode example and time until the display is completed may be shortened. However, it is also conceivable to memorize a using method of the user and set the using method as the last closed tab type from a next time onward.

Three tab images are displayed in the present exemplary embodiment. However, the number is not limited thereto.

The first tab 80a, the second tab 80b, and the third tab 80c are located on a right end side of the extended display region 411, and are opposite to the main thumbnail image display area 61 (Fig. 6) with respect to the candidate area 63a.

As shown in Figs. 9A, 9B and 9C, in the present exemplary embodiment, among the first tab 80a, the second tab 80b, and the third tab 80c, the first tab 80a is located at the uppermost side, the second tab 80b is located below the first tab 80a, and the third tab 80c is located at the lowermost side. However, these relative positions are not fixed and may be changed by the user.

Illustration of the first tab 80a, the second tab 80b, and the third tab 80c is omitted in Figs. 5 to 8. However, any one of the first display mode example, the second display mode example, and the third display mode example may be displayed according to a setting of the user without using the control not to display these tabs 80a to 80c.

In the above-described display mode in the candidate area 63a in any of the first display mode example, the second display mode example, and the third display mode example, the plural other page thumbnail images 65 are displayed in a form of being bundled. In a bundled state, since the other page thumbnail images 65 are partially overlapped and displayed, the user cannot see all the other page thumbnail images 65. Therefore, by an operation of the user, the bundled other page thumbnail images 65 may be changed to a state of being separated from one another and not being bundled. This will be described below.

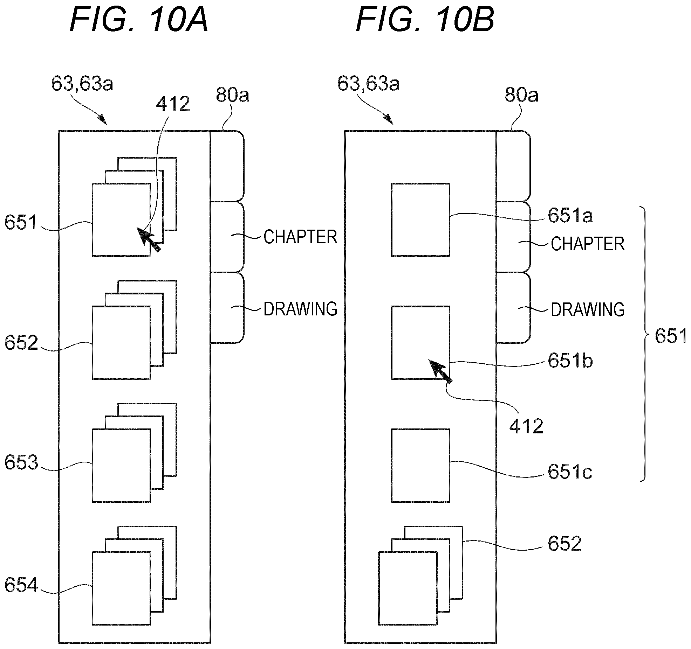

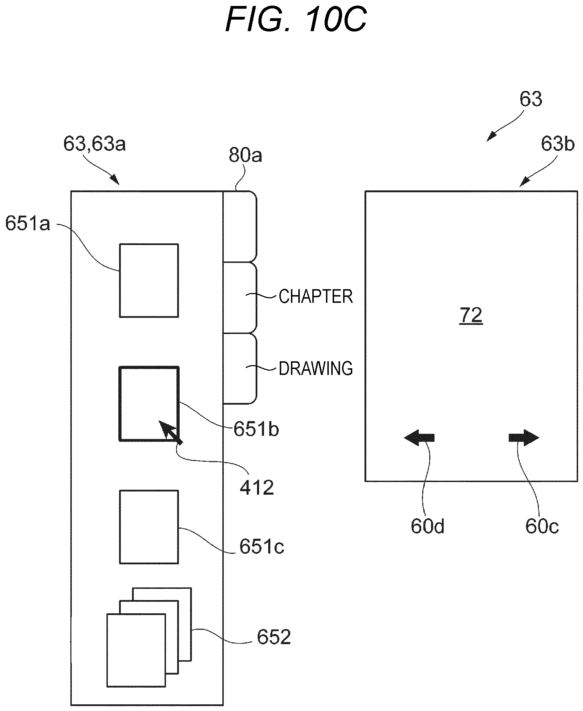

Figs. 10A, 10B and 10C show a situation in which an other page thumbnail image group 651 that is bundled and displayed in the candidate area 63a of the other page thumbnail image display area 63 is changed to a state of not being bundled, and are shown in time series in order of Figs. 10A, 10B and 10C. In the other page thumbnail image groups 651, 652, 653, 654 shown in the drawings, in the case of the first display mode example, the above-described other page thumbnail images 65 are bundled and displayed.

In a scene shown in Fig. 10A, when the bundled other page thumbnail image groups 651 to 654 are displayed in the candidate area 63a of the other page thumbnail image display area 63, an operation of the cursor 412 continuously pointing to the other page thumbnail image group 651 is performed.

In response to the operation of the cursor 412 by the user, the scene proceeds to a scene shown in Fig. 10B. That is, the other page thumbnail images 651a, 651b, 651c constituting the other page thumbnail image group 651 are changed from a state of being partially overlapped and displayed as shown in Fig. 10A to a state of being separated from one another and displayed as shown in Fig. 10B.

Specifically, the other page thumbnail images 651a to 651c are separated in an upper-lower direction and arranged in a line, and are displayed on a single page. The other page thumbnail image groups 652 to 654 located below the other page thumbnail image group 651 are slid downward and displayed. That is, the other page thumbnail image group 652 is displayed below the other page thumbnail image 651c.

In the scene shown in Fig. 10B, the cursor 412 continuously points to the other page thumbnail image 651b of the other page thumbnail image group 651 separated in the candidate area 63a. Accordingly, the scene proceeds to a scene shown in Fig. 10C. That is, the enlarged thumbnail image 72 of the other page thumbnail image 651b is displayed in the area 63b of the other page thumbnail image display area 63.

In this way, the other page thumbnail image group 651 that is bundled and displayed in the candidate area 63a according to the first display mode example is separated and displayed as the other page thumbnail images 651a to 651c by the operation using the cursor 412. Thereafter, the enlarged thumbnail image 72 of the other page thumbnail image 651b is displayed in the area 63b.

More specifically, when the enlarged thumbnail image 72 of any of the other page thumbnail images 651a to 651c is not displayed in the area 63b and a position of the cursor 412 is in a region other than the candidate area 63a, the separately displayed other page thumbnail images 651a to 651c of the other page thumbnail image group 651 are bundled again (see Fig. 10A).

In the present exemplary embodiment, the other page thumbnail image group 651 is the plural other page thumbnail images 651a to 651c. The plural other page thumbnail images 651a to 651c are partially overlapped and shown in the candidate area 63a (see Fig. 10A), and are separated from one another and shown in the candidate area 63a (see Fig. 10B). Further, the other page thumbnail image 651b, which is designated by the user among the other page thumbnail images 651a to 651c, is shown as the enlarged thumbnail image 72 in the area 63b (see Fig. 10C). Further, the time-series change from Fig. 10A to Fig. 10C is not one direction, and a time-series change from Fig. 10C to Fig. 10A is also executed.

Here, the other page thumbnail images 651a to 651c in Figs. 10A, 10B and 10C are an example of plural thumbnail images, are partially overlapped and displayed on the screen (see the other page thumbnail image group 651 in Fig. 10A), and are separated from one another and displayed on the screen (see Fig. 10B).

The other page thumbnail image groups 651 to 654 in Figs. 10A, 10B and 10C are examples of groups that are divided into groups of candidates meeting predetermined conditions and that are shown on the screen. The display conditions according to the first display mode example to the third display mode example shown in Figs. 10A, 10B and 10C are examples of the predetermined conditions.

The other page thumbnail image display area 63 constituting a part of the related thumbnail image display area 62 has been described with reference to Figs. 9A, 9B, 9C, 10A, 10B and 10C, and the other document thumbnail image display area 64 (see Fig. 5) will be described below.

### (Display Mode in Candidate Area 64a of Other Document Thumbnail Image Display Area 64)

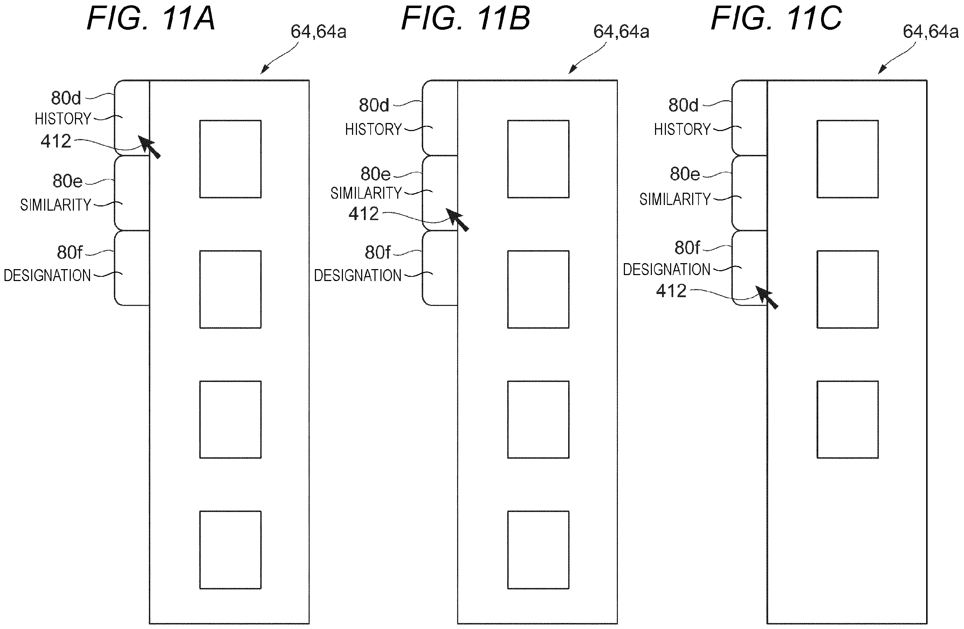

Figs. 11A, 11B and 11C show display modes of the candidate area 64a of the other document thumbnail image display area 64, in which Fig. 11A shows a fourth display mode example, Fig. 11B shows a fifth display mode example, and Fig. 11C shows a sixth display mode example. Figs. 11A, 11B and 11C correspond to Figs. 9A, 9B and 9C showing the other page thumbnail image display area 63.

The fourth display mode example shown in Fig. 11A is a history display in which an other document thumbnail image displayed as an enlarged thumbnail image is displayed as a history for at least predetermined time in the past.

The history may be displayed as the other document thumbnail image on a single page, or may be displayed as an other document thumbnail image group in which plural another document thumbnail images are bundled.

The fifth display mode example shown in Fig. 11B is a similarity order display in which the another document thumbnail images having a high degree of similarity to a name of a document including the main thumbnail image 71 (for example, see Fig. 6) are displayed in order. It is conceivable to determine a degree of the similarity according to a fact that a partial match of characters is present. That is, the similarity increases as the number of partial matches increases, and the similarity decreases as the number of partial matches decreases. In the candidate area 64a, an image having a high degree of similarity is displayed at an upper side, and an image having a low degree of similarity is displayed at a lower side. In this way, in the fifth display mode example, similar file names are extracted and displayed as candidates.

The sixth display mode example shown in Fig. 11C is a user designation display in which the another document thumbnail image designated by the user is displayed as a candidate.

In terms of arrangement order of the candidates in the candidate area 64a, the latest candidate may be displayed at the upper side, and the oldest candidate may be displayed at the lower side. The candidates displayed in the candidate area 64a may be controlled to change positions of the candidates by an operation of the cursor 412.

As shown in Figs. 11A to 11C, three tab types which are a fourth tab 80d, a fifth tab 80e, and a sixth tab 80f are displayed in the candidate area 64a of the other document thumbnail image display area 64. The tabs 80d to 80f are images of index tabs for changing a display mode of the candidate area 64a. By selecting any one of the tabs 80d to 80f, the display mode of the candidate area 64a is switched.

More specifically, the fourth tab 80d, the fifth tab 80e, and the sixth tab 80f respectively correspond to the fourth display mode example, the fifth display mode example, and the sixth display mode example described above. That is, when the fourth tab 80d is selected, the above-described fourth display mode example is displayed in the candidate area 64a. When the fifth tab 80e is selected, the fifth display mode example is displayed, and when the sixth tab 80f is selected, the sixth display mode example is displayed.

The fourth tab 80d, the fifth tab 80e, and the sixth tab 80f are located on a left end side of the extended display region 411, and are opposite to the main thumbnail image display area 61 (Fig. 6) with respect to the candidate area 64a.

As shown in Figs. 11A, 11B and 11C, in the present exemplary embodiment, among the fourth tab 80d, the fifth tab 80e, and the sixth tab 80f, the fourth tab 80d is located at the uppermost side, the fifth tab 80e is located below the fourth tab 80d, and the sixth tab 80f is located at the lowermost side. However, these relative positions are not fixed and may be changed by the user.

The candidates are separated from one another and displayed in Figs. 11A, 11B and 11C. However, the present disclosure is not limited thereto. The candidates may be controlled to be partially overlapped and displayed as shown in Figs. 9A, 9B and 9C and to be separated from one another and displayed by an operation of the user as shown in Figs. 10A, 10B and 10C.

Here, the first tab 80a, the second tab 80b, and the third tab 80c shown in Figs. 9A, 9B and 9C, and the fourth tab 80d, the fifth tab 80e, and the sixth tab 80f shown in Figs. 11A, 11B and 11C are examples of regions for selecting a group of candidates.

The other page thumbnail image groups 651, 652, 653, 654 shown in Figs. 10A, 10B and 10C are examples of the group of candidates meeting a predetermined condition.

### (Processing Procedure Example)

The above-described processing procedure will be described.

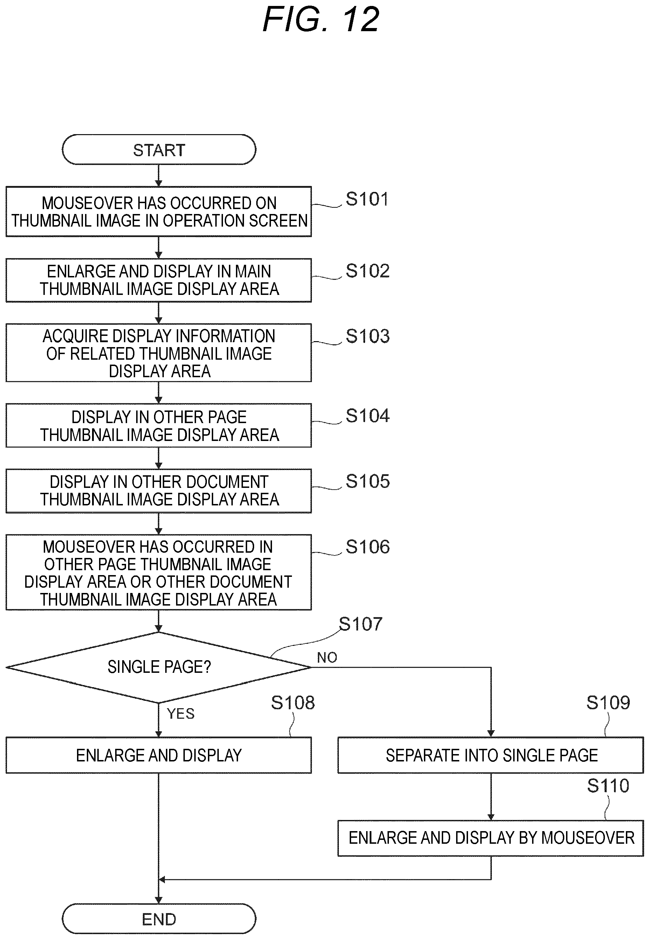

Fig. 12 is a flowchart showing a processing procedure example according to the present exemplary embodiment.

In the processing procedure example shown in Fig. 12, when the operation determination unit 101 (see Fig. 3) detects that mouseover has occurred on the thumbnail image in the operation screen 400 (see Fig. 2) (step 101), the enlarged image output unit 103 (see Fig. 3) enlarges and displays the thumbnail image in the main thumbnail image display area 61 (see Fig. 6) (step 102). Thereafter, the display controller 102 (see Fig. 3) acquires display information of the related thumbnail image display area 62 (step 103). The display information referred to here includes information on the candidates displayed in the candidate area 63a of the other page thumbnail image display area 63 and information on the candidates displayed in the candidate area 64a of the other document thumbnail image display area 64. The former is acquired from the secondary storage 30, and the latter is acquired by the other document retrieval and information acquisition unit 2a (see Fig. 4). The display information includes a candidate list generated by the candidate list generator 2e (see Fig. 4).

This display information is stored and sequentially updated.

Specifically, the display information for the candidate area 63a includes information for executing the page number division display as the first display mode example, the segment division display as the second display mode example, and the extraction display as the third display mode example, and tab information shown in the first tab 80a, the second tab 80b, and the third tab 80c (see Figs. 9A, 9B and 9C).

In the page number division display, information is generated based on processing executed by the page dividing unit 2d (see Fig. 4). In the segment division display and the extraction display, information is generated based on analysis executed by the in-page information analyzing unit 2c (see Fig. 4).

The display information for the candidate area 64a includes information for executing the history display as the fourth display mode example, the similarity order display as the fifth display mode example, and the user designation display as the sixth display mode example, and tab information shown in the fourth tab 80d, the fifth tab 80e, and the sixth tab 80f (see Figs. 11A, 11B and 11C).

In the history display and the user designation display, necessary information is generated based on information acquired by the operation history and setting information acquisition unit 2b (see Fig. 4). In the similarity order display, necessary information is generated based on processing executed by the other document retrieval and information acquisition unit 2a (see Fig. 4).

Based on the above-described acquired display information, the related image output unit 104 (see Fig. 3) displays a thumbnail image in the other page thumbnail image display area 63 (step 104), and displays a thumbnail image in the other document thumbnail image display area 64 (step 105).

When the operation determination unit 101 (see Fig. 3) detects that the mouseover has occurred in the other page thumbnail image display area 63 or the other document thumbnail image display area 64 (step 106), the operation determination unit 101 determines whether the mouseover thumbnail image is a single page (step 107). When the mouseover thumbnail image is a single page (Yes in step 107), the enlarged image output unit 103 (see Fig. 3) enlarges and displays the thumbnail image (step 108). When the mouseover thumbnail image is not a single page (No in step 107), the thumbnail image is separated into a single page (step 109), and when the mouseover occurs, the enlarged image output unit 103 enlarges and displays the thumbnail image (step 110).

### (Modification of Extended Display Region 411)

Here, in the extended display region 411 according to the present exemplary embodiment, as shown in Fig. 6 described above, the main thumbnail image display area 61 is formed at a center, the other page thumbnail image display area 63 is formed at a right side, and the other document thumbnail image display area 64 is formed at a left side. However, the present disclosure is not limited thereto, and various modifications are conceivable. This will be described below.

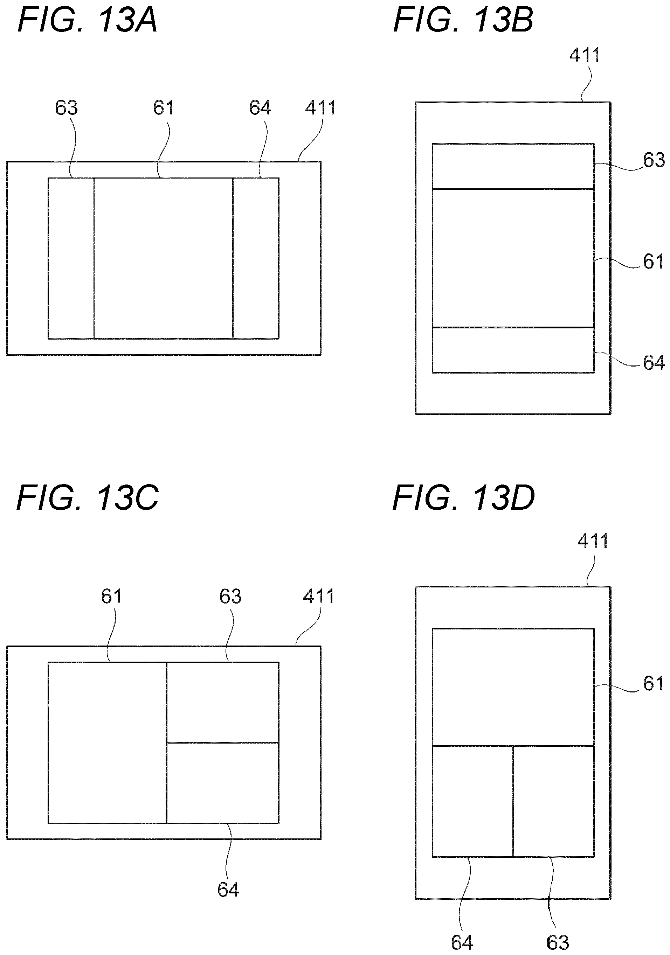

Fig. 13A, 13B, 13C and 13D show the modifications of the extended display region 411, in which Fig. 13A shows the first modification, Fig. 13B shows the second modification, Fig. 13C shows the third modification, and Fig. 13D shows the fourth modification.

In the extended display region 411 according to the first modification, as shown in Fig. 13A, a left and right arrangement is opposite to that in a case (see Fig. 6) according to the present exemplary embodiment. That is, the main thumbnail image display area 61 is formed at the center, the other page thumbnail image display area 63 is formed at the left side, and the other document thumbnail image display area 64 is formed at the right side.

In the present exemplary embodiment and the first modification, the extended display region 411 has a horizontally long rectangular shape. However, a modification in a case in which the extended display region 411 has a vertically long shape is also conceivable.

As shown in Fig. 13B, the extended display region 411 according to the second modification has an upper-lower arrangement and a vertically long shape. In the extended display region 411, the main thumbnail image display area 61 is formed at the center in the upper-lower direction, the other page thumbnail image display area 63 is formed at the upper side, and the other document thumbnail image display area 64 is formed at the lower side.

In this upper-lower arrangement, it is also conceivable that the other page thumbnail image display area 63 is formed at the lower side and the other document thumbnail image display area 64 is formed at the upper side.

In addition to the left-right distribution and the upper-lower distribution described above, other modifications are also conceivable.

The third modification is a case in which the extended display region 411 has a horizontally long shape. The extended display region 411 is divided into two parts in the left-right direction. One of the two parts in the left-right direction is set as the main thumbnail image display area 61, and the other is divided into two parts in the upper-lower direction. Any one of the two parts in the upper-lower direction is set as the other page thumbnail image display area 63, and the other is set as the other document thumbnail image display area 64.

For example, as shown in Fig. 13C, a left side of the extended display region 411 having a horizontally long shape is set as the main thumbnail image display area 61, and a right side of the extended display region 411 is divided into two parts in the upper-lower direction. An upper side of the right side is set as the other page thumbnail image display area 63, and a lower side of the right side is set as the other document thumbnail image display area 64.

The fourth modification is a case in which the extended display region 411 has a vertically long shape. The extended display region 411 is divided into two parts in the upper-lower direction. One of the two parts in the upper-lower direction is set as the main thumbnail image display area 61, and the other is divided into two parts in the left-right direction. Any one of the two parts in the left-right direction is set as the other page thumbnail image display area 63, and the other is set as the other document thumbnail image display area 64. In other words, when the extended display region 411 includes a long side and a short side, the long side is divided into two parts. One of the two parts is set as the main thumbnail image display area 61, and the other is further divided into two parts in a short side direction. The two parts are allocated to the other page thumbnail image display area 63 and the other document thumbnail image display area 64.

For example, as shown in Fig. 13D, an upper side of the extended display region 411 having a vertically long shape is set as the main thumbnail image display area 61, and a lower side of the extended display region 411 is divided into two parts in the left-right direction. A right side of the lower side is set as the other page thumbnail image display area 63, and a left side of the lower side is set as the other document thumbnail image display area 64.

The processing performed by the image processing apparatus 1 according to the present exemplary embodiment is prepared as, for example, a program such as application software. It is needless to say that the program may be provided by the communication unit. Alternatively, the program may be provided by being stored in a recording medium such as a CD-ROM.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The exemplary embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

## Claims

1. An information processing apparatus comprising:
a processor configured to
display a thumbnail image of an object on a screen instead of opening the object in response to a selection of the object, and
present, on the screen, at least one candidate that is referable and that is to be displayed together with the displayed thumbnail image of the object.

2. The information processing apparatus according to claim 1, wherein
the processor is configured to display, on the screen, at least one thumbnail image of the at least one candidate as at least one candidate thumbnail image.

3. The information processing apparatus according to claim 2, wherein
the at least one candidate thumbnail image is at least one other thumbnail image of the object other than the thumbnail image of the object displayed on the screen.

4. The information processing apparatus according to either claim 2 or claim 3, wherein
the at least one candidate thumbnail image is a thumbnail image of at least one other obj ect.

5. The information processing apparatus according to any of the preceding claims, in particular claim 2, wherein
the at least one candidate thumbnail image includes a plurality of candidate thumbnail images, and
the plurality of candidate thumbnail images are displayed, on the screen, in a partially overlapped state or in a separated state.

6. The information processing apparatus according to any of the preceding claims, in particular claim 1, wherein
the at least one candidate is presented, on the screen, in a group of candidates divided according to a predetermined condition.

7. The information processing apparatus according to any of the preceding claims, in particular claim 6, wherein
the predetermined condition is changeable by a user.

8. The information processing apparatus according to any of the preceding claims, in particular claim 6, wherein
a plurality of regions for selecting the group of candidates are provided in the screen, and
relative positions of the plurality of regions are changeable by a user.

9. The information processing apparatus according to any of the preceding claims, in particular claim 2, wherein
the at least one candidate thumbnail image includes at least one other thumbnail image of the object other than the thumbnail image of the object displayed on the screen and a thumbnail image of at least one other object, and
the screen is divided into an area in which the thumbnail image of the object is displayed, an area in which the at least one other thumbnail image is displayed, and an area in which thumbnail image of the at least one other object is displayed.

10. An information processing apparatus comprising:
a processor configured to
divide a screen into
a first area in which a thumbnail image of an object is displayed instead of opening the object in response to a selection of the object, and
a second area in which at least one thumbnail image of a candidate that is referable and that is to be displayed together with the displayed thumbnail image of the object in the first area, and
divide the second area into
an area in which at least one other thumbnail image of the object other than the displayed thumbnail image in the first area is displayed and in which a thumbnail image designated by a user from the at least one other thumbnail image of the object is displayed in an enlarged state, and
an area in which at least one thumbnail image of at least one other object is displayed and in which a thumbnail image designated by the user from the at least one thumbnail image of the at least one other object is displayed in an enlarged state.

11. A program causing a computer to execute a process, the process comprising:
displaying a thumbnail image of an object on a screen instead of opening the object in response to a selection of the object, and
presenting, on the screen, at least one candidate that is referable and that is to be displayed together with the displayed thumbnail image of the object.

12. A program causing a computer to execute a process, the process comprising:
dividing a screen into
a first area in which a thumbnail image of an object is displayed instead of opening the object in response to a selection of the object, and
a second area in which at least one thumbnail image of a candidate that is referable and that is to be displayed together with the displayed thumbnail image of the object in the first area, and
dividing the second area into
an area in which at least one other thumbnail image of the object other than the displayed thumbnail image in the first area is displayed and in which a thumbnail image designated by a user from the at least one other thumbnail image of the object is displayed in an enlarged state, and
an area in which at least one thumbnail image of at least one other object is displayed and in which a thumbnail image designated by the user from the at least one thumbnail image of the at least one other object is displayed in an enlarged state.
